# EUROPEAN PATENT APPLICATION

(11) **EP 1 758 426 A1**
(43) Date of publication of application: **28.02.2007**
(21) Application number: 05291778.8
(22) Date of filing: 24.08.2005
(51) Int. Cl.: H04Q 11/04, H04L 29/12, H04L 29/08

(54) **Network device, interface device and method for exchanging packets**

(71) Applicant: ALCATEL, 75008 Paris (FR)
(72) Inventor: Van Moffaert, Annelies Marie Etienne, 2350 Vosselaar (BE); Urie, Alistair, 92130 Issy-Les-Moulineaux (FR)
(74) Representative: Narmon, Gisèle Marie Thérèse

(57) **Abstract**

Network devices (1) for receiving first and second packets comprising source addresses and destination addresses and codes from interface devices (2-4) via network couplings (12-14), which codes define couplings (15-20) between the interface devices (2-4) and terminal devices (5-10), are provided with detector units (109) for, in response to detections of codes, selecting different processes (101a-103a,101b-103b) for processing the packets. These network devices (1) can distinguish between different subscribers using different terminal devices (5,6) and/or between different services delivered via the different terminal devices (5,6) and all using the same network coupling (12). The different processes (101a-103a,101b-103b) may comprise different routings (101a,101b) or non-authentication and authentication processes (102a,102b) or non-cryptographic and cryptographic processes (103a,103b). The packets are internet protocol packets and the addresses are internet protocol addresses and the codes are port numbers. Upstream and downstream information may be exchanged to inform one of the network device (1) and the interface device (2) about the other one.

## Description

The invention relates to a network device for receiving a first packet and a second packet from an interface device via a network coupling, the first packet comprising a first source address and a first destination address and a first code and the second packet comprising a second source address and a second destination address and a second code, the first and second codes being different codes, the interface device being coupled to a first terminal device via a first terminal coupling defined by the first code and being coupled to a second terminal device via a second terminal coupling defined by the second code.

Examples of such a network device are access multiplexers, switches, routers, forwarders and servers. Examples of such an interface device are modems, residential routers, residential gateways and one or more hops in an access network. Examples of such terminal devices are personal computers, wired telephones and wireless telephones.

A prior art network device is of common general knowledge. An interface device receives first data from a first terminal device and in response sends a first packet comprising a first source address and a first destination address and a first code to the network device and receives second data from a second terminal device and in response sends a second packet comprising a second source address and a second destination address and a second code to the network device. Owing to the fact that the first and second packets originate from the same interface device, the first and second source addresses will usually be identical source addresses, without excluding the fact that the interface device might have permission to use two different source addresses. Owing to the fact that the first and second packets are usually destined for different destinations, the first and second destination addresses will usually be different destination addresses, without excluding the fact that the first and second destination addresses might be identical destination addresses coincidentally.

A first code that defines a first coupling between the first terminal device and the interface device is added to the first packet by the interface device and a second code that defines a second coupling between the second terminal device and the interface device is added to the second packet by the interface device. The respective first and second codes in the respective first and second packets are at the destinations copied into respective first and second returning packets to allow the interface device to forward respective first and second returning data of the respective first and second returning packets to the respective first and second terminal devices.

The known network device is disadvantageous, inter alia, owing to the fact that it cannot distinguish between different subscribers using the different terminal devices and all using the same network coupling and/or between different services delivered via the different terminal devices and all using the same network coupling.

It is an object of the invention, inter alia, to provide a network device as defined in the preamble that can distinguish between different subscribers using the different terminal devices and all using the same network coupling and/or between different services delivered via the different terminal devices and all using the same network coupling and/or between different categories of subscribers using the different terminal devices and all using the same network coupling.

The network device according to the invention is characterized in that the network device comprises a detector unit for detecting the first and second codes and for, in response to a detection of the first code, selecting a first process for processing the first packet and for, in response to a detection of the second code, selecting a second process for processing the second packet, the first and second processes being different processes.

According to the prior art, the first and second codes only have a meaning in the interface device. The interface device has generated the first and second codes and has added the first and second codes to the first and second packets. At the destinations, the first and second codes are copied and added to first and second returning packets, and these copied first and second codes in the first and second returning packets tell the interface device to which terminal device the returning data of a returning packet is to be forwarded.

According to the invention, the first and second codes are given a further meaning in the network device. By introducing the detector unit in the network device, the network device according to the invention has got the ability to detect the first and second codes and to, in response to different detections, select different processes for processing the different packets. As a result, the network device according to the invention can distinguish between different subscribers using the different terminal devices and all using the same network coupling and/or between different services delivered via the different terminal devices and all using the same network coupling and/or between different categories of subscribers using the different terminal devices and all using the same network coupling.

The different processes may for example comprise different routings in a network environment, with at least one of the different routings not being based (solely) on a source address or a destination address used for the network environment but now (also) being based on a code defining a coupling between the interface device and a terminal device in a terminal environment.

The fact that the network device receives first and second packets from an interface device via a network coupling, the first and second packets comprising first and second source addresses and first and second destination addresses and first and second codes does not exclude the possibilities that the network device may receive more than one first packet, more than one second packet, one or more third packets each comprising a third source address and a third destination address and a third code etc. and one or more packets not comprising one or more codes.

The network device according to the invention is further advantageous, inter alia, in that it allows subscribers to be treated in a universal personal way without location dependencies and in that it allows services to be delivered to subscribers in a universal personal way without location dependencies.

An embodiment of the network device according to the invention is characterized in that the network coupling comprises a predefined coupling and the first process comprises a non-authentication process or a first authentication process and the second process comprises a second authentication process different from the first authentication process.

In case the network coupling comprises a predefined coupling, such as an integrated services digital network telephone line or a digital subscriber line, at least one subscriber and/or at least one service have already been authenticated. Then, the first process may comprise a non-authentication process or a first (for example simple) authentication process and the second process may comprise a second (for example sophisticated) authentication process different from the first authentication process, such that for example first packets are billed in a standard way by sending a bill to a standard subscriber and second packets are billed in a non-standard way by sending a bill to a non-standard and different subscriber.

An embodiment of the network device according to the invention is characterized in that the first process comprises a non-cryptographic process or a first cryptographic process and the second process comprises a second cryptographic process different from the first cryptographic process.

In case the first process comprises a non-cryptographic process (such as a non-cryptographic based protection process) or a first cryptographic process (such as a first cryptographic based protection process for protecting a first communication and/or a first authentication) and the second process comprises a second cryptographic process (such as a second cryptographic based protection process for protecting a second communication and/or a second authentication) different from the first cryptographic process, first packets may be forwarded to a core network via a standard channel and second packets may be forwarded to the core network via a non-standard and secure channel.

An embodiment of the network device according to the invention is characterized in that the first and second packets are internet protocol packets and the source addresses are internet protocol source addresses and the destination addresses are internet protocol destination addresses and the codes are port numbers.

The port numbers may comprise source port numbers and/or may comprise destination port numbers.

An embodiment of the network device according to the invention is characterized in that the network device comprises a packet receiver unit for receiving the first and second packets and an information receiver unit for receiving upstream information from the interface device, which upstream information defines the terminal devices and/or the terminal couplings and/or the codes and/or the detections and/or the processes.

This upstream information originating from the interface device allows the network device to be adjusted interactively.

An embodiment of the network device according to the invention is characterized in that the network device comprises an information transmitter unit for transmitting downstream information to the interface device, which downstream information defines the terminal devices and/or the terminal couplings and/or the codes and/or the detections and/or the processes.

This downstream information originating from the network device allows the interface device to be adjusted interactively.

The invention also relates to an interface device for transmitting a first packet and a second packet to a network device via a network coupling, the first packet comprising a first source address and a first destination address and a first code and the second packet comprising a second source address and a second destination address and a second code, the first and second codes being different codes, the interface device being coupled to a first terminal device via a first terminal coupling defined by the first code and being coupled to a second terminal device via a second terminal coupling defined by the second code.

The interface device according to the invention is characterized in that the network device comprises a detector unit for detecting the first and second codes and for, in response to a detection of the first code, selecting a first process for processing the first packet and for, in response to a detection of the second code, selecting a second process for processing the second packet, the first and second processes being different processes.

An embodiment of the interface device according to the invention is characterized in that the network coupling comprises a predefined coupling and the first process comprises a non-authentication process or a first authentication process and the second process comprises a second authentication process different from the first authentication process.

An embodiment of the interface device according to the invention is characterized in that the first process comprises a non-cryptographic process or a first cryptographic process and the second process comprises a second cryptographic process different from the first cryptographic process.

An embodiment of the interface device according to the invention is characterized in that the first and second packets are internet protocol packets and the source addresses are internet protocol source addresses and the destination addresses are internet protocol destination addresses and the codes are port numbers.

An embodiment of the interface device according to the invention is characterized in that the interface device comprises a packet transmitter unit for transmitting the first and second packets and an information transmitter unit for transmitting upstream information to the network device, which upstream information defines the terminal devices and/or the terminal couplings and/or the codes and/or the detections and/or the processes.

An embodiment of the interface device according to the invention is characterized in that the interface device comprises an information receiver unit for receiving downstream information from the network device, which downstream information defines the terminal devices and/or the terminal couplings and/or the codes and/or the detections and/or the processes.

The invention also relates to a unit as defined in any one of the network devices and the interface devices defined above.

The invention also relates to a method for exchanging a first packet and a second packet between a network device and an interface device via a network coupling, the first packet comprising a first source address and a first destination address and a first code and the second packet comprising a second source address and a second destination address and a second code, the first and second codes being different codes, the interface device being coupled to a first terminal device via a first terminal coupling defined by the first code and being coupled to a second terminal device via a second terminal coupling defined by the second code, which method according to the invention is characterized in that the method comprises the steps of detecting the first and second codes and of, in response to a detection of the first code, selecting a first process for processing the first packet and of, in response to a detection of the second code, selecting a second process for processing the second packet, the first and second processes being different processes.

The invention also relates to a computer program product for exchanging a first packet and a second packet between a network device and an interface device via a network coupling, the first packet comprising a first source address and a first destination address and a first code and the second packet comprising a second source address and a second destination address and a second code, the first and second codes being different codes, the interface device being coupled to a first terminal device via a first terminal coupling defined by the first code and being coupled to a second terminal device via a second terminal coupling defined by the second code, which computer program product according to the invention is characterized in that the computer program product comprises the functions of detecting the first and second codes and of, in response to a detection of the first code, selecting a first process for processing the first packet and of, in response to a detection of the second code, selecting a second process for processing the second packet, the first and second processes being different processes.

The invention also relates to a medium for storing the computer program product as defined above.

Embodiments of the unit according to the invention and of the method according to the invention and of the computer program product according to the invention and of the medium according to the invention correspond with the embodiments of the network device according to the invention and of the interface device according to the invention.

The invention is based upon an insight, inter alia, that prior art network devices use source addresses and destination addresses for processing packets, and is based upon a basic idea, inter alia, that codes different from the source addresses and the destination addresses may be used to process the packets too.

The invention solves the problem, inter alia, to provide a network device as defined in the preamble that can distinguish between different subscribers using the different terminal devices and all using the same network coupling and/or between different services delivered via the different terminal devices and all using the same network coupling and/or between different categories of subscribers using the different terminal devices and all using the same network coupling. The network device according to the invention is further advantageous, inter alia, in that it allows subscribers to be treated in a universal personal way without location dependencies and in that it allows services to be delivered to subscribers in a universal personal way without location dependencies.

These and other aspects of the invention will be apparent from and elucidated with reference to the embodiments(s) described hereinafter.
Fig. 1 shows diagrammatically a network device according to the invention coupled to three interface devices according to the invention each coupled to two terminal devices,
Fig. 2 shows diagrammatically in greater detail a network device according to the invention, and
Fig. 3 shows diagrammatically in greater detail an interface device according to the invention.

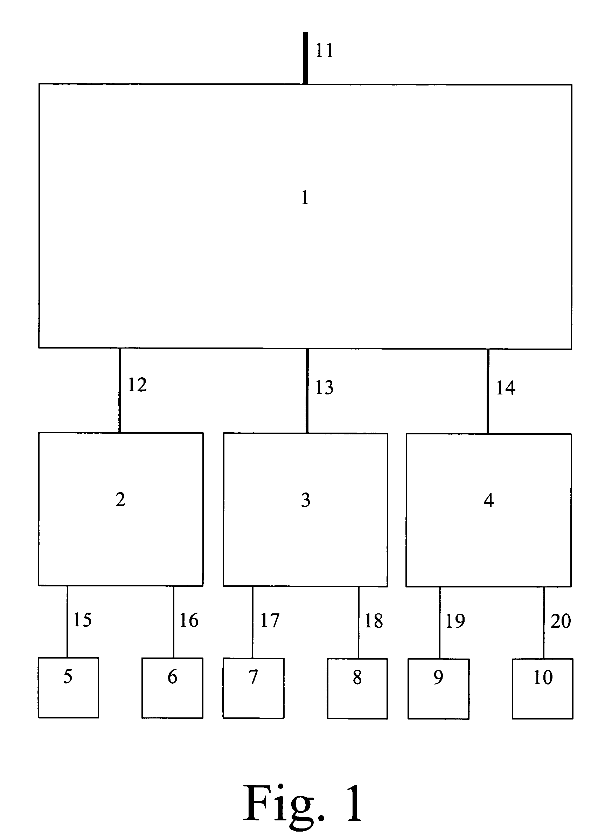

The network device 1 according to the invention shown in Fig. 1 is coupled to a core network not shown via a core network coupling 11 and to three interface devices 2-4 according to the invention via three network couplings 12-14. Each interface device 2 (3,4) is further coupled to two terminal devices 5,6 (7,8,9,10) via two terminal couplings 15,16 (17,18,19,20). Other numbers of interface devices and of terminal devices are not to be excluded.

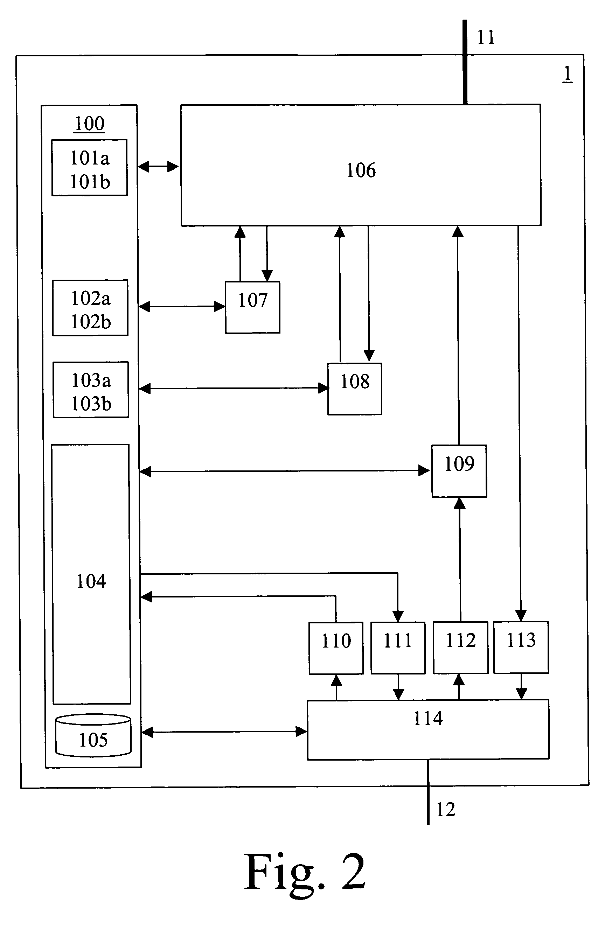

The network device 1 according to the invention shown in Fig. 2 in greater detail comprises a controller 100 for performing first processes 101a,102a,103a and second processes 101b,102b,103b and comprising a processor 104 and a memory 105. The controller 100 is coupled to a coupler 106 which is coupled via a core network coupling 11 to a core network not shown and to an authentication unit 107, to an encryption/decryption unit 108, to a packet receiver unit 112 via a detector unit 109 and to a packet transmitter unit 113. The authentication unit 107 and the encryption/decryption unit 108 and the detector unit 109 are further coupled to the controller 100. The packet receiver unit 112 and the packet transmitter unit 113 are further coupled to the network coupling 12 via a coupling interface 114, which is further coupled to the controller 100 and to an information receiver unit 110 and to an information transmitter unit 111 which are both further coupled to the controller 100.

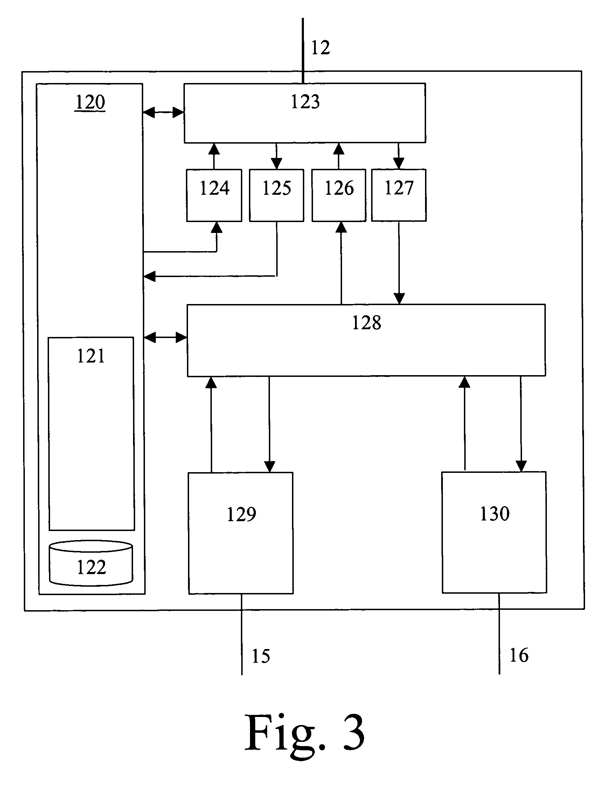

The interface device 2 according to the invention shown in Fig. 3 in greater detail comprises a controller 120 comprising a processor 121 and a memory 122. The controller 120 is coupled to a coupling interface 123 which is coupled to the network coupling 12 and to an information transmitter 124 and an information receiver 125 which are both further coupled to the controller 120. The coupling interface 123 is further coupled to a packet transmitter 126 and a packet receiver 127 which are both further coupled to a (de)multiplexer 128. The (de)multiplexer 128 is further coupled to the controller 120 and to a first device interface 129 coupled to the terminal coupling 15 and to a second device interface 130 coupled to the terminal coupling 16.

The interface device 2 receives first data from a first terminal device 5 via the terminal coupling 15 and in response sends via its packet transmitter 126 a first packet comprising a first source address and a first destination address and a first code to the network device 1 and receives second data from a second terminal device 6 via the terminal coupling 16 and in response sends via its packet transmitter 126 a second packet comprising a second source address and a second destination address and a second code to the network device 1. Owing to the fact that the first and second packets originate from the same interface device 2, the first and second source addresses will usually be identical source addresses, without excluding the fact that the interface device 2 might have permission to use two different source addresses. Owing to the fact that the first and second packets are usually destined for different destinations, the first and second destination addresses will usually be different destination addresses, without excluding the fact that the first and second destination addresses might be identical destination addresses coincidentally.

A first code that defines the first terminal coupling 15 between the first terminal device 5 and the interface device 2 is added to the first packet by the interface device 2 and a second code that defines the second terminal coupling 16 between the second terminal device 6 and the interface device 2 is added to the second packet by the interface device 2. The respective first and second codes in the respective first and second packets are at the destinations copied into respective first and second returning packets to allow the interface device 2 to forward respective first and second returning data of the respective first and second returning packets to the respective first and second terminal devices 5 and 6.

In a prior art situation, the network device 1 cannot distinguish between different subscribers using the different terminal devices 5 and 6 and all using the same network coupling 12 and/or between different services delivered via the different terminal devices 5 and 6 and all using the same network coupling 12 and/or between different categories of subscribers using the different terminal devices 5 and 6 and all using the same network coupling 12.

According to the invention, the network device 1 is provided with the detector unit 109 for detecting the first and second codes and for, in response to a detection of the first code, selecting a first process 101a,102a,103a for processing the first packet and for, in response to a detection of the second code, selecting a second process 101b,102b,103b for processing the second packet, the first and second processes 101a-103a,101b-103b being different processes.

In the prior art situation, the first and second codes only had a meaning in the interface device 2. The interface device 2 has generated the first and second codes and has added the first and second codes to the first and second packets. At the destinations, the first and second codes are copied and added to first and second returning packets, and these copied first and second codes in the first and second returning packets tell the interface device 2 to which terminal device 5 or 6 the returning data of a returning packet is to be forwarded.

According to the invention, the first and second codes are given a further meaning in the network device 1. By introducing the detector unit 109 in the network device 1, the network device 1 according to the invention has got the ability to detect the first and second codes and to, in response to different detections, select different processes 101a-103a,101b-103b for processing the different packets. As a result, the network device 1 according to the invention can distinguish between different subscribers using the different terminal devices 5 and 6 and all using the same network coupling 12 and/or between different services delivered via the different terminal devices 5 and 6 and all using the same network coupling 12 and/or between different categories of subscribers using the different terminal devices 5 and 6 and all using the same network coupling 12.

The different processes 101a and 101b are for example run via the processor 104 and may for example comprise different routings in a network environment, with at least one of the different routings not being based (solely) on a source address or a destination address used for the network environment but now (also) being based on a code defining a coupling 15 or 16 between the interface device 2 and the terminal device 5 or 6 in a terminal environment. Thereto, the controller 100 is informed via the detector unit 109 about a first detection of a first code and a second detection of a second code, and in response controls the coupler 106 for, in response to a first detection, selecting a first route and for, in response to a second detection, selecting a second route, whereby for example one of these first and second routes solely depends on a source address and/or a destination address and the other one of these first and second routes also depends on the detected code or solely depends on this detected code. As a result, different users of different terminal devices 5 and 6 may for example be guided to different internet service providers, even though these different users having their access via the same interface device and the same network device. Of course, this does not exclude other solutions that reach the same goal.

In other words, in a system comprising destinations, a network device 1, an interface device 2 and terminal devices 5 and 6, packets are exchanged from the terminal devices 5 and 6 via the interface device 2 and the network device 1 to the destinations and returning packets are exchanged from the destinations via the network device 1 and the interface device 2 to the terminal devices 5 and 6. These packets comprise codes that define the couplings between the interface device 2 and the terminal devices 5 and 6, and these codes are used between the interface device 2 and the destinations for allowing the network between the interface device 2 and the destinations to distinguish between different subscribers using the different terminal devices 5 and 6 and all using the same network coupling 12 and/or between different services delivered via the different terminal devices 5 and 6 and all using the same network coupling 12.

The network coupling 12 for example comprises a predefined coupling, such as an integrated services digital network telephone line or a digital subscriber line, in which case at least one subscriber and/or at least one service have already been authenticated. Then, the first process 102a may comprise a non-authentication process (such as a multiplexing or a switching or a routing or a forwarding or a serving process) or a first (for example simple) authentication process and the second process 102b may comprise a second (for example sophisticated) authentication process different from the first authentication process, such that for example first packets are billed in a standard way by sending a bill to a standard subscriber and second packets are billed in a non-standard way by sending a bill to a non-standard and different subscriber. The different processes 102a and 102b are for example run via the processor 104. One of the first and second processes 102a and 102b for example requires the authentication unit 107 to be activated and/or to form part of a route to be followed by the packets and/or to generate requesting packets and to wait for response packets and the other one of the first and second processes 102a and 102b for example requires the authentication unit 107 to be de-activated and/or not to form part of a route to be followed by the packets.

The first process 103a for example comprises a non-cryptographic process (such as a multiplexing or a switching or a routing or a forwarding or a serving process) or a first cryptographic process and the second process for example comprises a second cryptographic process different from the first cryptographic process. Then, first packets may be forwarded to a core network via a standard channel and second packets may be forwarded to the core network via a non-standard and secure channel. The different processes 103a and 103b are for example run via the processor 104. One of the first and second processes 103a and 103b for example requires the encryption/decryption unit 108 to be activated and/or to form part of a route to be followed by the packets and the other one of the first and second processes 103a and 103b for example requires the encryption/decryption unit 108 to be de-activated and/or not to form part of a route to be followed by the packets.

The first and second packets may be internet protocol packets and the source addresses may be internet protocol source addresses and the destination addresses may be internet protocol destination addresses and the codes may be port numbers such as source port numbers and/or destination port numbers.

The packet receiver unit 112 receives the first and second packets and the information receiver unit 110 receives upstream information from the interface device 2, which upstream information defines the terminal devices 5 and 6 and/or the terminal couplings 15 and 16 and/or the codes and/or the detections and/or the processes 101a-103a and 101 b-103b. This upstream information originating from the interface device 2 allows the network device 1 to be adjusted interactively in response to this upstream information. The packet transmitter unit 126 transmits the first and second packets and the information transmitter unit 124 transmits the upstream information to the network device 1.

The information transmitter unit 111 transmits downstream information to the interface device 2, which downstream information defines the terminal devices 5 and 6 and/or the terminal couplings 15 and 16 and/or the codes and/or the detections and/or the processes 101a-103a and 101b-103b. This downstream information originating from the network device 1 allows the interface device 2 to be adjusted interactively in response to this downstream information. The information receiver unit 125 receives the downstream information from the network device 1.

The packet transmitter unit 113 transmits returning first and second packets to the interface device 2, which returning first and second packets originate from a destination coupled to the network device 1 via the core network coupling 11. The packet receiver unit 127 receives these returning first and second packets.

The packet transmitter unit 126 also converts first data originating from the first terminal device 5 into the first packet and also converts second data originating from the second terminal device 6 into the second packet. Thereto, the controller 120 supplies the source addresses and the destination addresses and the codes, for example via the (de)multiplexer 128, or directly via a connection not shown between the controller 120 and the packet transmitter unit 126. The packet receiver unit 127 also extracts returning first data from a returning first packet and also extracts returning second data from a returning second packet, which first returning data is to be supplied to the first terminal device 5 and which second returning data is to be supplied to the second terminal device 6. Thereto, the controller 120 controls the (de)multiplexer 128 after being informed of the codes in the returning data, for example via the (de)multiplexer 128, or directly via a connection not shown between the controller 120 and the packet receiver unit 127.

The exchange of upstream information from the interface device 2 to the network device 1 may be initiated by a user or may be initiated by the interface device 2 automatically for example in response to a detection of a kind of terminal device 5 or 6 or of a kind of device coupling 15 or 16 or of a code used by the interface device 2. The upstream information may define for example (a relationship between) the kind of detection to be performed by the network device 1 and/or the process to be performed. For example in case of a wired telephone being coupled to the interface device 2 in a wired way, any (further) authentication might not be necessary, where, in case of a wireless telephone being coupled to the interface device 2 in a wireless way, further authentication might need to be performed. In view of this it might be advantageous to define code ranges and to program the interface device 2 such that it automatically allocates a terminal device or a device coupling to a specific code range. The upstream information may be in the form of packets or may form part of the packets or may be exchanged separately from the packets.

The exchange of downstream information from the network device 1 to the interface device 2 may be initiated by an operator or may be initiated by the network device 1 automatically for example in response to a reception of rules to be taken into account. These rules may originate from the provider or from the user or from a governmental institution. The downstream information may define for example (one or more relationships between) a kind of terminal device 5 or 6 and/or a kind of device coupling 15 or 16 and/or a code (to be) used by the interface device 2 and may inform the interface device 2 of the kind of detection performed by the network device 1 and/or the process performed. For example a wired telephone coupled to the interface device 2 in a wired way may get a code that says that any (further) authentication won't be necessary, where a wireless telephone coupled to the interface device 2 in a wireless way may get a code that says that further authentication is to be performed. In view of this it might be advantageous to define code ranges and to program the interface device 2 with the downstream information such that it automatically allocates a terminal device 5 or 6 or a device coupling 15 or 16 to a specific code range. The downstream information may be in the form of packets or may form part of the packets or may be exchanged separately from the packets.

In Fig. 1-3, each coupling / connection may be a wired coupling / connection or a wireless coupling / connection. A predefined coupling is a coupling for which coupling at least one subscriber has been identified and verified. Any unit/block shown may be divided into sub-units/sub-blocks, and any two or more units/blocks may be integrated into a new and larger unit/block. Any unit/block shown may comprise hardware and/or software. The computer program product according to the invention may be stored on and/or comprise a fixed medium such as the memories 105 and/or 122 or a removable medium not shown. etc. The expression "for" in for example "for receiving", "for detecting", "for processing" etc. does not exclude that other functions are performed as well, simultaneously or not. The expressions "X coupled to Y" and "a coupling between X and Y" and "coupling/couples X and Y" etc. do not exclude that an element Z is in between X and Y. The expressions "P comprises Q" and "P comprising Q" etc. do not exclude that an element R is comprised/included as well. The terms "a" and "an" do not exclude a possible presence of one or more pluralities.

The steps and/or functions of detecting and selecting do not exclude further steps and/or functions, like for example, inter alia, the steps and/or functions described for the Figures etc.

## Claims

1. Network device (1) for receiving a first packet and a second packet from an interface device (2-4) via a network coupling (12-14), the first packet comprising a first source address and a first destination address and a first code and the second packet comprising a second source address and a second destination address and a second code, the first and second codes being different codes, the interface device (2-4) being coupled to a first terminal device (5,7,9) via a first terminal coupling (15,17,19) defined by the first code and being coupled to a second terminal device (6,8,10) via a second terminal coupling (16,18,20) defined by the second code, **characterized in that** the network device (1) comprises a detector unit (109) for detecting the first and second codes and for, in response to a detection of the first code, selecting a first process (101a,102a,103a) for processing the first packet and for, in response to a detection of the second code, selecting a second process (101b,102b,103b) for processing the second packet, the first and second processes (101a-103a,101b-103b) being different processes.

2. Network device (1) as defined in claim 1, **characterized in that** the network coupling (12-14) comprises a predefined coupling and the first process (102a) comprises a non-authentication process or a first authentication process and the second process (102b) comprises a second authentication process different from the first authentication process.

3. Network device (1) as defined in claim 1 or 2, **characterized in that** the first process (103a) comprises a non-cryptographic process or a first cryptographic process and the second process (103b) comprises a second cryptographic process different from the first cryptographic process.

4. Network device (1) as defined in claim 1, 2 or 3, **characterized in that** the first and second packets are internet protocol packets and the source addresses are internet protocol source addresses and the destination addresses are internet protocol destination addresses and the codes are port numbers.

5. Network device (1) as defined in claim 1, 2, 3 or 4, **characterized in that** the network device (1) comprises a packet receiver unit (112) for receiving the first and second packets and an information receiver unit (110) for receiving upstream information from the interface device (2-4), which upstream information defines the terminal devices (5-10) and/or the terminal couplings (15-20) and/or the codes and/or the detections and/or the processes (101-103).

6. Network device (1) as defined in claim 1, 2, 3, 4 or 5, **characterized in that** the network device (1) comprises an information transmitter unit (111) for transmitting downstream information to the interface device (2-4), which downstream information defines the terminal devices (5-10) and/or the terminal couplings (15-20) and/or the codes and/or the detections and/or the processes (101-103).

7. Interface device (2-4) for transmitting a first packet and a second packet to a network device (1) via a network coupling (12-14), the first packet comprising a first source address and a first destination address and a first code and the second packet comprising a second source address and a second destination address and a second code, the first and second codes being different codes, the interface device (2-4) being coupled to a first terminal device (5,7,9) via a first terminal coupling (15,17,19) defined by the first code and being coupled to a second terminal device (6,8,10) via a second terminal coupling (16,18,20) defined by the second code, **characterized in that** the network device (1) comprises a detector unit (109) for detecting the first and second codes and for, in response to a detection of the first code, selecting a first process (101a,102a,103a) for processing the first packet and for, in response to a detection of the second code, selecting a second process (101b,102b,103b) for processing the second packet, the first and second processes (101a-103a,101b-103b) being different processes.

8. Interface device (2-4) as defined in claim 7, **characterized in that** the network coupling (12-14) comprises a predefined coupling and the first process (102a) comprises a non-authentication process or a first authentication process and the second process (102b) comprises a second authentication process different from the first authentication process.

9. Interface device (2-4) as defined in claim 7 or 8, **characterized in that** the first process (103a) comprises a non-cryptographic process or a first cryptographic process and the second process (103b) comprises a second cryptographic process different from the first cryptographic process.

10. Interface device (2-4) as defined in claim 7, 8 or 9, **characterized in that** the first and second packets are internet protocol packets and the source addresses are internet protocol source addresses and the destination addresses are internet protocol destination addresses and the codes are port numbers.

11. Interface device (2-4) as defined in claim 7, 8, 9 or 10, **characterized in that** the interface device (2-4) comprises a packet transmitter unit (126) for transmitting the first and second packets and an information transmitter unit (124) for transmitting upstream information to the network device (1), which upstream information defines the terminal devices (5-10) and/or the terminal couplings (15-20) and/or the codes and/or the detections and/or the processes (101-103).

12. Interface device (2-4) as defined in claim 7, 8, 9, 10 or 11, **characterized in that** the interface device (2-4) comprises an information receiver unit (125) for receiving downstream information from the network device (1), which downstream information defines the terminal devices (5-10) and/or the terminal couplings (15-20) and/or the codes and/or the detections and/or the processes (101-103).

13. Unit as defined in any one of the claims 1-12.

14. Method for exchanging a first packet and a second packet between a network device (1) and an interface device (2-4) via a network coupling (12-14), the first packet comprising a first source address and a first destination address and a first code and the second packet comprising a second source address and a second destination address and a second code, the first and second codes being different codes, the interface device (2-4) being coupled to a first terminal device (5,7,9) via a first terminal coupling (15,17,19) defined by the first code and being coupled to a second terminal device (6,8,10) via a second terminal coupling (16,18,20) defined by the second code, **characterized in that** the method comprises the steps of detecting the first and second codes and of, in response to a detection of the first code, selecting a first process (101a,102a,103a) for processing the first packet and of, in response to a detection of the second code, selecting a second process (102a,102b,103b) for processing the second packet, the first and second processes (101a-103a,101b-103b) being different processes.

15. Computer program product for exchanging a first packet and a second packet between a network device (1) and an interface device (2-4) via a network coupling (12-14), the first packet comprising a first source address and a first destination address and a first code and the second packet comprising a second source address and a second destination address and a second code, the first and second codes being different codes, the interface device (2-4) being coupled to a first terminal device (5,7,9) via a first terminal coupling (15,17,19) defined by the first code and being coupled to a second terminal device (6,8,10) via a second terminal coupling (16,18,20) defined by the second code, **characterized in that** the computer program product comprises the functions of detecting the first and second codes and of, in response to a detection of the first code, selecting a first process (101a,102a,103a) for processing the first packet and of, in response to a detection of the second code, selecting a second process (101b,102b,103b) for processing the second packet, the first and second processes (101a-103a,101b-103b) being different processes.

16. Medium for storing the computer program product as defined in claim 15.
